# EUROPEAN PATENT APPLICATION

(11) **EP 4 517 270 A1**
(43) Date of publication of application: **05.03.2025**
(21) Application number: 24197065.6
(22) Date of filing: 28.08.2024
(51) Int. Cl.: G01D 5/20

(54) **INDUCTIVE ANGULAR POSITION SENSOR**

(30) Priority: 01.09.2023 ES 202330730
(71) Applicant: Amper Sistemas, S.A., 28223 Pozuelo de Alarcón (ES)
(72) Inventor: Santos Romero, Miguel, 28810 Villalbilla (Madrid) (ES); Nieto Montesano, Francisco Miguel, 28760 Tres Cantos (Madrid) (ES); París Fernández, José Agustín, 28008 Madrid (ES)
(74) Representative: Zuazo Araluze, Alexander

(57) **Abstract**

The present invention relates to an inductive angular position sensor (1), comprising a stator (2) and a rotor (3). The stator (2) is provided with a primary coil (21) and a plurality of secondary coils (22, 23, 24). The rotor (3) is provided with a rotary disk (4) rotating about its axis of revolution (5). The inductive sensor (1) is characterized in that it comprises only three secondary coils (22, 23, 24) connected to one another in a star shape, such that the primary coil (21) causes the simultaneous excitation of same, with the corresponding voltages induced in the secondary coils (22, 23, 24) being processed to obtain the angular position by comparing at least two of the three induced voltages or a combination thereof (U_{AB}, U_{BC}, U_{CA}).

## Description

### FIELD OF THE ART

The present invention relates to an inductive angular position sensor of the type comprising a stator provided with a primary coil which generates an electromagnetic excitation field when powered by an electrical source, and a plurality of secondary coils the excitation of which is caused by said electromagnetic field.

Angular position is determined by comparing the induced voltages observed in the secondary coils when a rotary disk of the rotor, upon rotating about its axis of revolution, interferes with the electromagnetic field generated in a different manner depending on its position of rotation, as a result of Foucault's currents appearing in the disk.

The invention has a practical application, for example, in water meter devices or flow meters for detecting the volume of water consumed.

### BACKGROUND OF THE INVENTION

Inductive angular position sensors are well known in the prior art, having advantages and drawbacks with respect to other angular position sensors, such as magnetic or capacitive sensors.

Among the advantages of inductive sensors with respect to other angular position sensors their greater operational robustness, design simplicity, and resistance against disturbances from external electromagnetic fields are notable. However, they have the drawbacks of having a relatively high cost and consumption.

Patent document ES 2823450 T3 discloses an inductive angular position sensor of the type referred to in the invention.

This inductive sensor is characterized in that the secondary coils form one or more pairs of secondary coils, said coils of each pair being connected, on the one hand, to one another, in series and in phase opposition relative to one another, and, on the other hand, to the terminals of a measuring element that can generate an output signal that depends on the voltage at the terminals of said pair.

Additionally, such inductive sensor is characterized in that the two secondary coils of the or of each pair are arranged symmetrically with respect to the axis of revolution of the rotary disk, with the primary coil and the secondary coils being made on a printed circuit and the electrical source for powering the primary coil being a pulse generator.

With this inductive sensor configuration, improvements are achieved with respect to inductive sensors known in the prior art, such as greater resistance to disturbances from external electromagnetic fields and to attempts to tamper with or manipulate the angular position detected by the sensor.

Likewise, with the primary coil and the secondary coils being made on a printed circuit, a reduced inductive sensor manufacturing cost is achieved. With the use of an electrical source, consisting of a pulse generator, for powering the primary coil, a reduced consumption and usage cost is achieved.

The objective of the present invention is to propose a solution consisting of an alternative inductive angular position sensor which, in particular, overcomes the drawbacks of the prior art and offers improvements with respect to the known angular position sensors, having particularly further reduced manufacturing and usage cost, as well as consumption.

### DESCRIPTION OF THE INVENTION

To achieve this objective as well as the additional technical advantages that can be derived below, the present invention provides an inductive angular position sensor comprising a stator and a rotor.

The stator is provided with a primary coil which generates an electromagnetic excitation field when powered by an electrical source, and a plurality of secondary coils, the excitation of which is caused by the generated electromagnetic field.

The rotor is provided with a rotary disk rotating about its axis of revolution which, upon rotating, interferes with the electromagnetic field generated in a different manner depending on its position of rotation. The rotary disk is configured to interfere with the generated electromagnetic field in a different manner, i.e., having a response that is not uniform or not symmetrical around its axis of revolution, depending on the position of rotation.

To that end, in particular, the rotary disk can be partially metallized or surrounded partially by a coil, for example, provided partially with a metallized coating.

In the context of the invention, "partially metallized" or "surrounded partially by a coil" should be understood to mean only part of the rotary disk rotating about its axis of revolution is metallized or surrounded by a coil, respectively, such that Foucault's currents are selectively generated in said part of the disk for the operation of the inductive sensor when the disk rotates about the axis of revolution. In particular, the partially metallized disk can be made up of a metallic half-disk and a non-metallic half-disk.

The inductive angular position sensor according to the invention is characterized in that it comprises only three secondary coils connected to one another in a star shape. The primary coil causes the simultaneous excitation of the secondary coils, with the corresponding voltages induced in the secondary coils being processed to obtain the angular position by comparing at least two of the three induced voltages or a combination thereof, that is, for example, by comparing at least two of the three voltages between the central point and each output terminal, or two of the three voltages between output terminals, of the star-shaped connection.

The inductive sensor according to the invention is formed by only three secondary coils. In contrast, the inductive sensor disclosed in patent document ES 2823450 T3 requires at least two pairs of secondary coils in order to be able to determine the angular position unambiguously. This is because, by means of such inductive sensor, it is not possible to distinguish the correct angular position from between the two possible values according to the direction of rotation if only one pair of secondary coils is used.

Advantageously, by means of the inductive sensor according to the invention it is possible to determine the angular position unambiguously with a smaller number of secondary coils, i.e., three instead of four, providing a more simplified solution with a further reduced manufacturing cost in addition to other advantages, and without diminishing the advantages offered by the inductive sensors known in the prior art, as explained below.

The electrical source generates an alternating or pulsating electrical voltage for powering the primary coil, the electromagnetic excitation of which produces induced voltages in the secondary coils. Since the secondary coils are connected to one another in a star shape, said induced voltages, in the absence of other electromagnetic fields, tend to equalize a signal that is stable in amplitude and phase difference, such that the possible disturbances affecting the three coils equally are canceled, causing there to be no significant variations in the output signals.

According to the invention, this differential equalizing effect, i.e., between the different voltages induced during the operation of the inductive sensor, ensures the protection of the inductive sensor against disturbances from external electromagnetic fields, as well as against attempts to tamper with or manipulate the detected angular position, given that any disturbance is automatically compensated and therefore rejected.

In the inductive sensor according to the invention, the angular position can be determined from two of the three induced voltages in the corresponding secondary coils or from a combination thereof, for example, by observing directly two of the three voltages between the output terminals and the central point or two of the three output voltages, between the output terminals, of the star-shaped connection. Induced voltages are processed to obtain angular position by means of comparing said voltages or a combination thereof.

The rotary disk, upon rotating about its axis of revolution, interferes with the electromagnetic field generated by the primary coil, causing a variation in the excitation of the secondary coils depending on its position of rotation, which implies a module and/or phase variation of the induced voltages of the secondary coils. Therefore, comparing the module and/or phase of two of the three induced voltages or a combination thereof allows deducing the angular position of rotation unambiguously.

Comparison can be performed in a manner that is in itself known. Likewise, the output signals can be processed electronically, in particular digitally, to obtain the detected angular position value.

Given that only two of the three induced voltages or independent combinations are required, angular position can be obtained redundantly with the third induced voltage or an independent combination. In this way, the inductive sensor according to the invention provides a solution with greater robustness and reliability in obtaining the angular position measurement in comparison with the inductive sensors known in the prior art.

Likewise, the inductive sensor according to the invention has the advantage of allowing a better utilization of the electromagnetic excitation field of the primary coil, since it is possible to have a larger area per secondary coil under excitation, with a larger number of lines of the electromagnetic excitation field being captured for the same current generated in the primary coil.

This better utilization of the electromagnetic excitation field has the following advantages. On the one hand, the design of the inductive sensor becomes flexible since the separation between the stator and the rotor can be increased for a given power of the power source. On the other hand, for a given separation between the stator and the rotor, an electrical source with lower power can be used, and this means a lower consumption and greater sensor autonomy, as well as a reduction in the noise of the processed signals.

### BRIEF DESCRIPTION OF THE DRAWINGS

The invention is described in greater detail below and by way of non-limiting illustrative example for a preferred embodiment in reference to the attached drawings. In the drawings:
Figure 1 shows a schematic perspective view of an embodiment of the inductive angular position sensor according to the invention;
Figure 2 shows a schematic plan view of the arrangement of the primary coil and the secondary coils made on a printed circuit according to an embodiment of the invention;
Figure 3 shows a diagram of the printed circuit according to an embodiment of the invention;
Figure 4 schematically shows a graph with the theoretical evolution of the output voltages and embodiments in which said voltages are compared to obtain the angular position according to an embodiment of the invention.

### PREFERRED EMBODIMENT OF THE INVENTION

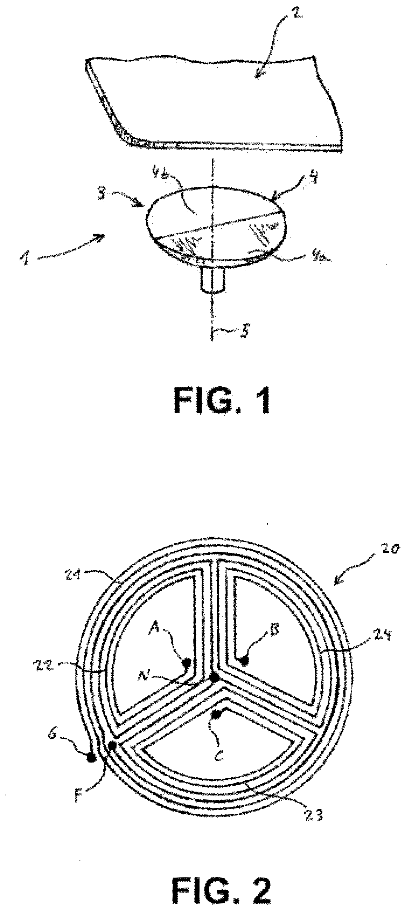

Figure 1 shows an embodiment of the inductive angular position sensor (1) according to the invention. The inductive sensor (1) comprises a stator (2) and a rotor (3). The rotor (3) is formed by a rotary disk (4) which rotates with respect to the stator (2) about the axis of revolution (5) of the disk (4). The rotary disk (4) is partially metallized, having a metallic part (4a) and a non-metallic part (4b) which, in the example that is shown, corresponds to a half-disk.

According to the invention, it is envisaged that the inductive sensor (1) can be mechanically coupled to a water meter or flow meter, for example, by means of clipping, such that the rotary disk (4) is driven by the flow rate of a liquid (not depicted). However, the use of the inductive sensor (1) in other devices in which it can be coupled or integrated is not ruled out.

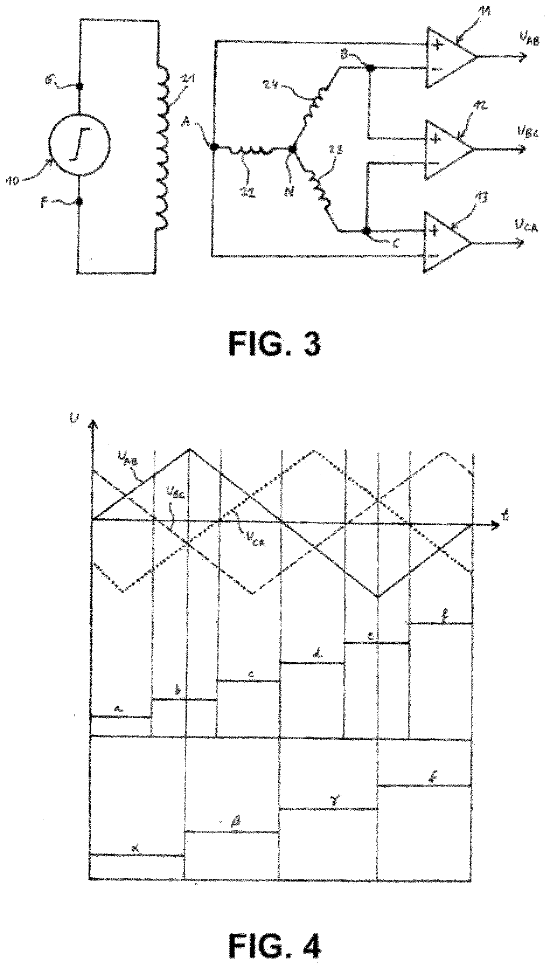

Referring to Figures 2 and 3, the stator (2) comprises a primary coil (21) which generates an electromagnetic excitation field when powered by an electrical source (10), and a plurality of secondary coils (22, 23, 24), the excitation of which is caused by the generated electromagnetic field. According to a preferred embodiment of the invention, the electrical source (10) is a pulse generator, the electrical voltage being a pulsing electrical voltage.

The rotary disk (4) of the rotor (3) interferes with the electromagnetic field generated in the primary coil (21) in a different manner, i.e., changing based on the angle rotated, which allows determining the angular position of the rotation of the rotor (3) with respect to the stator (2) and, in particular, the number of turns over time.

The inductive sensor (1) comprises only three secondary coils (22, 23, 24) connected to one another in a star shape. The primary coil (21) causes the simultaneous excitation of the three secondary coils (22, 23, 24).

As can be seen in Figure 2, according to a preferred embodiment of the invention, the primary coil (21) and the secondary coils (22, 23, 24) are made on a printed circuit (20) arranged in the stator (2). The secondary coils (22, 23, 24) are identical, having the same shape and characteristics, facilitating the equalizing of the induced voltages.

The secondary coils (22, 23, 24) are arranged uniformly distributed around the axis of revolution (5) of the rotary disk (4), covering adjacent circular sectors. The primary coil (21) is arranged adjacently surrounding the secondary coils (22, 23, 24). These possible configurations of the primary coil (21) and the secondary coils (22, 23, 24) contribute to an optimal utilization of the electromagnetic excitation field.

In the embodiment shown in the figures, to obtain the angular position, the corresponding voltages induced in the secondary coils (22, 23, 24) between terminals A and N (central point of the star-shaped connection), B and N, C and N, are processed, with the output voltages, which are the voltages between terminals A and B (U_{AB}), between terminals B and C (U_{BC}), and/or between terminals C and A (U_{CA}) obtained through electronic voltage comparators (11, 12, 13) or equivalent electronic circuits, for example, by means of transistors, being compared to one another.

The voltages induced in the secondary coils (22, 23, 24) are voltages appearing in said coils (22, 23, 24) due to the electromagnetic excitation field effect generated by the primary coil (21) when powered by the pulse generator (10) between terminals F and G.

The top part of Figure 4 depicts, in an illustrative manner, a theoretical evolution over time (t) of the voltage (U) for the three observable output voltages (U_{AB}, U_{BC}, U_{CA}) from the circuit shown in Figure 3. In the embodiment that is shown, the angular position is determined by comparing the shape of said voltages for different time intervals (t). By way of illustrative example, Figure 4 depicts the output voltages (U_{AB}, U_{BC}, U_{CA}) with a triangular shape.

In that sense, for example, in interval "a", U_{AB} rises, U_{BC} drops, and U_{CA} has a minimum; in interval "b", U_{AB} has a maximum, U_{BC} drops, and U_{CA} rises; in interval "c", U_{AB} drops, U_{BC} has a minimum, and U_{CA} rises; in interval "d", U_{AB} drops, U_{BC} rises, and U_{CA} has a maximum; in interval "e", U_{AB} has a minimum, U_{BC} rises, and U_{CA} drops; and in interval "f", U_{AB} rises, U_{BC} has a maximum, and U_{CA} drops.

Therefore, by identifying the shape of the voltages to be compared (whether it rises, drops, has a minimum or maximum), it is possible to determine the angular position unambiguously and with a direction of rotation, since it is possible to establish a sequence of the different comparison values corresponding to different angular positions and, therefore, number of turns, corresponding to the number of complete sequences in the required order.

As indicated above, only two of the three observable voltages (U_{AB}, U_{BC}, U_{CA}) are required to determine the angular position. For example, it is possible to determine the angular position by comparing only two of said voltages (U_{AB}, U_{BC}) for different time intervals "t". This is illustrated in the lower part of Figure 4 as explained below.

In that sense, for example, in the "α" interval, U_{AB} rises and U_{BC} drops; in the "β" interval, U_{AB} drops and U_{BC} has a minimum; in the "γ" interval, U_{AB} drops and U_{BC} rises; and in the "δ" interval, U_{AB} rises and U_{BC} has a maximum. Therefore, by identifying the shape of these two voltages to be compared (whether it rises, drops, has a minimum or maximum), it is also possible to determine the angular position unambiguously.

According to the invention, it is envisaged that the third voltage can be used for checking the detection performed using only two of the voltages, increasing the robustness of the inductive sensor. However, it is also envisaged that the third voltage can be used with another function such as, for example, to determine the rotational speed by observing the frequency of the corresponding signal.

Ultimately, the invention is not limited to the depicted embodiments, but rather it includes all the variants, modifications, and combinations comprised in the scope of the attached claims.

## Claims

1. An inductive angular position sensor (1), comprising:
- a stator (2) with a primary coil (21) which generates an electromagnetic excitation field when powered by an electrical source (10), and a plurality of secondary coils (22, 23, 24), the excitation of which is caused by the generated electromagnetic field; and
- a rotor (3) with a rotary disk (4) rotating about its axis of revolution (5) which, upon rotating, interferes with the electromagnetic field generated in a different manner depending on its position of rotation;
**characterized in that**
it comprises only three secondary coils (22, 23, 24) connected to one another in a star shape, such that the primary coil (21) causes the simultaneous excitation of same, with the corresponding voltages induced in the secondary coils (22, 23, 24) being processed to obtain the angular position by comparing at least two of the three induced voltages or a combination thereof (U_{AB}, U_{BC}, U_{CA}).

2. The sensor (1) according to claim 1, wherein the secondary coils (22, 23, 24) are arranged uniformly distributed around the axis of revolution (5) covering adjacent circular sectors.

3. The sensor (1) according to any one of claims 1 or 2, wherein the primary coil (21) is arranged adjacently surrounding the secondary coils (22, 23, 24).

4. The sensor (1) according to any one of the preceding claims, wherein the primary coil (21) and/or the secondary coils (22, 23, 24) are made on a printed circuit (20).

5. The sensor (1) according to any one of the preceding claims, wherein the electrical source is a pulse generator (10).
